(19) **Europäisches Patentamt**
**European Patent Office**
**Office européen des brevets**

(11) **EP 4 019 125 A1**

(12) **EUROPEAN PATENT APPLICATION**

(43) Date of publication:
**29.06.2022 Bulletin 2022/26**

(21) Application number: **20216353.1**

(22) Date of filing: **22.12.2020**

(51) International Patent Classification (IPC):
**B01J 20/24** (2006.01)    **B01J 20/28** (2006.01)
**B01J 20/285** (2006.01)    **B01J 20/291** (2006.01)
**B01J 20/30** (2006.01)    **B01J 20/32** (2006.01)
**B01D 15/38** (2006.01)    **B01D 67/00** (2006.01)
**B01D 69/06** (2006.01)    **B01D 71/08** (2006.01)
**C08J 3/16** (2006.01)

(52) Cooperative Patent Classification (CPC):
**B01J 20/24; B01D 15/3809; B01D 71/08;**
**B01J 20/28011; B01J 20/28033; B01J 20/285;**
**B01J 20/291; B01J 20/3064; B01J 20/3071;**
**B01J 20/3212; B01J 20/3219; B01J 20/3274;**
**C08J 5/046;** B01D 69/06; B01D 69/08;    (Cont.)

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(71) Applicant: **Sartorius Stedim Biotech GmbH**
**37079 Göttingen (DE)**

(72) Inventors:
 • **LEY, Adrian**
 **37079 Göttingen (DE)**
 • **PETERSEN, Rebecca**
 **37079 Göttingen (DE)**
 • **TAFT, Florian**
 **37079 Göttingen (DE)**

 • **ADAMETZ, Patrick**
 **37079 Göttingen (DE)**
 • **THIEFES, Axel**
 **37079 Göttingen (DE)**
 • **TOEPPNER, Kathrin**
 **37079 Göttingen (DE)**
 • **WEBER, Stella**
 **37079 Göttingen (DE)**
 • **GEHRMANN, Nils**
 **37079 Göttingen (DE)**
 • **HAGEMANN, Franziska**
 **37079 Göttingen (DE)**
 • **THOM, Volkmar**
 **37079 Göttingen (DE)**

(74) Representative: **Müller-Boré & Partner**
**Patentanwälte PartG mbB**
**Friedenheimer Brücke 21**
**80639 München (DE)**

(54) **CHROMATOGRAPHIC MATERIAL AND METHOD OF PRODUCING SAME**

(57)    The present invention relates to a chromatographic material comprising a polymer network material-based self-supporting bi-continuous separation matrix for adsorptive material separation in liquid media, and a method of producing the chromatographic material comprising a polymer network material-based self-supporting bi-continuous separation matrix.

**EP 4 019 125 A1**

(52) Cooperative Patent Classification (CPC): (Cont.)
C08J 2305/12

**Description**

The present invention relates to a chromatographic material comprising a polymer network material-based self-supporting bi-continuous separation matrix for adsorptive material separation in liquid media, and a method of producing the chromatographic material comprising a polymer network material-based self-supporting bi-continuous separation matrix.

Chromatography is a general separation technique that uses the distribution of the molecules of interest between a stationary phase and a mobile phase for molecular separation. The stationary phase refers to a porous media and imbibed immobile solvent. Columns with associated end caps, fittings and tubing are the most common configuration, with the media packed into the tube or column. The mobile phase is pumped through the column. The sample is introduced at one end of the column, and the various components (target substances and contaminants) interact with the stationary phase and are adsorbed to or in the media or traverse the column at different velocities. The separated components are collected or detected at the other end of the column. Adsorbed components may be released in a separate step by pumping an eluant solvent through the column. Chromatographic methods include, among other methods, gel chromatography, ion exchange chromatography, hydrophobic interaction chromatography, reverse phase chromatography, affinity chromatography, immunoadsorption chromatography, lectin affinity chromatography, ion affinity chromatography and other such well-known chromatographic methods.

Polysaccharide gels are known to play an important role for the manufacture of materials for separation of mixtures of biomolecules. Among the characteristics making these gels especially interesting can be mentioned their inertness in contact with proteins and other biomolecules and their porous structure. A further important property is their resistance against alkaline conditions, which is of great importance in large scale separation processes requiring frequent regeneration/sterilization of the gel.

Polysaccharide gels are used for various types of chromatography. One such example is gel filtration, whereby the sample constituents are size fractionated. This is an application where the inertness is of crucial importance, since any interaction between the gel material as such and the sample molecules makes the separation less effective and might even completely destroy the result. Another example of a commercially important chromatographic technique is ion exchange chromatography. Several materials for ion exchange chromatography are derived from dextran, agarose or cellulose. The choice of polysaccharide gels as the carrier matrix is based on their inertness and a well-established derivatization chemistry for the introduction of ion exchange groups. A further example is affinity chromatography. Again, polysaccharide gels are preferred in many applications due to the number of convenient techniques available for introducing the affinity ligands and due to the minimum of unspecific binding of biomolecules.

Polysaccharide gels may be produced in various shapes, for instance more or less regular beads like spheres, but also in the shape of membranes, etc., and can be used as a base matrix for the manufacture of chromatographic media, and as a carrier matrix in general for various biomolecules like cells, enzymes, antibodies etc.

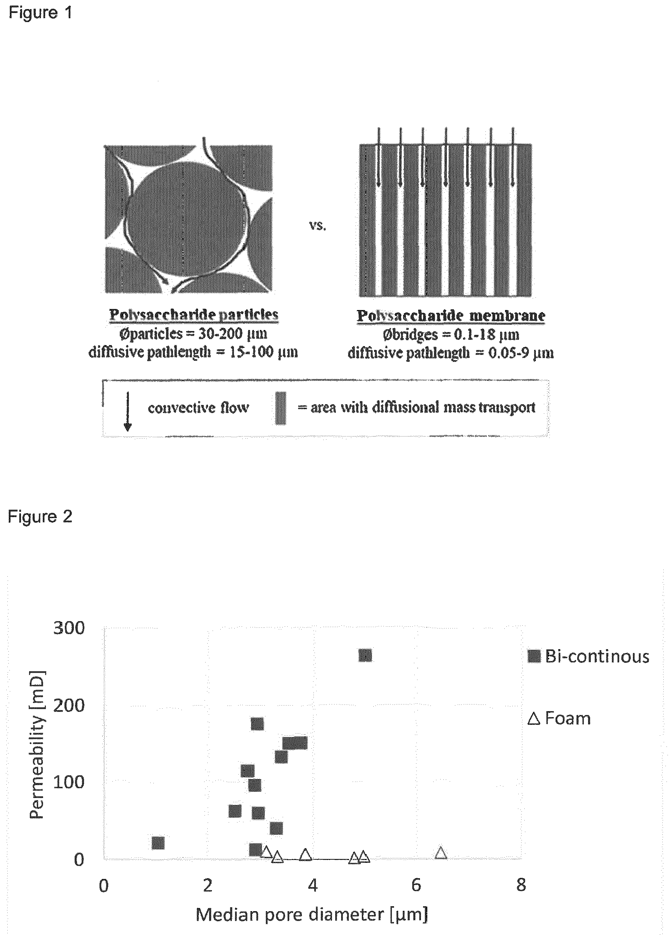

Polysaccharide gels typically have small diameter diffusion pores in a molecular dimension of about 10 to 500 nm, which may only be reached by components (target substances and/or contaminants) in the mobile phase via diffusion. In order to effectively transport binding components to the gel, a convective phase surrounds the polysaccharide gel, forming an interface between the convective phase and the diffusive gel phase. Polysaccharide gels are most widely used in the shape of particles of approximately 50 to 100 $\mu$m in diameter. These particles are packed into a chromatographic column where the interstitial phase between the particles forms the convective phase that allows to rapidly transport molecules through the column and to the surface of the beads, i.e. to the surface of the polysaccharide gel. Besides forming the convective phase that interfaces the diffusive phase by packing beads into a column, the convective phase can also be formed by large diameter convective pores (also called "flow through pores" or "macropores") which may provide flow passages or channels, through the gel. The solidified polysaccharide gel forms so-called "bridges" around the large diameter convective pores. The small diameter diffusion pores are within said bridges formed by the solidified polysaccharide. When such porous polysaccharide gels are packed in a chromatographic column and a liquid flow is applied through the column, the flow will mainly pass through the gel via the large diameter convective pores. The components (target substances and/or contaminants) to be separated are thus transported also to the inner parts of the gel by convective flow, which is a much faster way of transportation than diffusion. Therefore, only short distances have to be covered by diffusion in such porous polysaccharide gels. Figure 1 shows a comparison of the convective and diffusional flow paths in polysaccharide particles and polysaccharide membranes.

It is known from e.g. US 4,935,365 A that polysaccharides can be produced to contain macropores. A gel as described therein has a considerably larger surface area due to the macropores, a fact which increases its use in some applications, like cell culture and also in certain chromatographic techniques. The macropores in US 4,935,365 A are, however, not interconnected and there is accordingly no through flow via these pores.

The smaller the diameter of the pores is, the smaller also the "bridges" / diffusive path length (which is half the length of the bridge diameter) is. The correlation between large diameter convective pores and bridges is accessible through geometrical considerations. In particular, the bigger the large diameter convective pores become with a constant pore volume fraction (convective porosity), the bigger the bridges have to become because the bridges just represent the space between the large diameter convective pores. If there are less large diameter convective pores (bigger pores with constant volume fraction also means less pores) the space between them has to grow. Therefore, in case a porous polysaccharide material has rather small large diameter convective pores, the diffusive path length within the bridges is also rather small and the diffusive pores within the porous bridges are accessible within very short diffusion times. This geometrically given correlation indicates strongly why a smaller pore size is advantageous for a chromatographic operation within such materials.

In the production of porous polysaccharide materials having two types of pores, i.e. small diameter diffusion pores and large diameter convective pores, the pore size of the convective pores (and thus also the bridge size) and structure morphology of the polysaccharide material are influenced by the following interrelated process parameters:

- volume ratio (vol%) of surfactant
- type of surfactant
- volume ratio (vol%) of organic solvent (water immiscible organic phase)
- volume of the aqueous gelling phase
- type of organic solvent (single solvent or mixture of solvents)
- concentration of polysaccharide in the aqueous gelling phase
- stirring speed during mixing of the water-containing solution of the polysaccharide with an essentially water immiscible organic phase.

US 5,723,601 A describes a porous polysaccharide material having two types of pores, i.e. small diameter diffusion pores and large diameter convective pores. In the Examples of US 5,723,601 A, porous polysaccharide materials are produced in which the convective pores have a minimum diameter of 10 $\mu$m. Although US 5,723,601 A also mentions convective pore diameters as small as 0.5 $\mu$m, it is not possible from a technical point of view to produce porous polysaccharide materials having large diameter convective pores with a diameter of less than 10 $\mu$m by the methods taught by US 5,723,601 A, since US 5,723,601 A does not describe suitable combinations of the polysaccharide concentration, the surfactant (type and concentration) and the organic solvent to produce porous polysaccharide materials having such small convective pores. In particular, US 5,723,601 A teaches that smaller convective pores can be obtained in case of using a smaller surfactant concentration at a higher stirrer speed. However, when lowering the surfactant concentration at the highest possible stirrer speed and under the experimental conditions described in US 5,723,601 A, the minimum convective pore diameter that can be obtained for convective pores which are interconnected is about 6.5 $\mu$m. When the surfactant concentration is further lowered under the experimental conditions described in US 5,723,601 A, the obtained pore structure is not an interconnected pore structure, but a closed-cell foam structure, which will be demonstrated hereinafter. Foams consist of partially more or less connected globular structures as convective phase (macropores) between the diffusive phase, i.e. the macropores are not interconnected. The inherently resulting poorer connectivity results in structures with a very low permeability at comparable pore size (i.e. the diameter of the globular structure), since there is no through flow via these pores. Therefore, foam structures can only be traversed in a very inhomogeneous and inadequate manner, which results in disadvantages in the homogeneous distribution of fluid in the chromatographic medium and, in addition to the lower permeability, in disadvantages in the dynamic binding.

US 7,479,233 B2 describes a porous coated medium for adsorption or chromatography based separations comprising a base substrate, the base substrate being a porous non-woven fabric, self-supporting structure, and one or more porous coatings being formed of a polysaccharide on at least a portion of all surfaces of the substrate. In the production method of the coated media, the inert substrate is first coated with a polysaccharide layer, and then the coated substrate is subjected to a gelling agent such that the polysaccharide forms a porous hydrogel coating. Due to this specific production method (coating and afterwards gelling), the inert substrate constitutes the structure of the porous hydrogel coating, i.e. the pore structure of the hydrogel coating follows the pore structure of the inert substrate. Since the presence of a large amount of inert substrate is needed as a support for the porous coating (which acts as the chromatography medium for binding target compounds and/or contaminants), the possible amount of porous binding phase is massively restricted, and the possible binding capacity of the adsorption medium is negatively affected.

US 8,298,657 B2 describes a functional, porous, interpenetrating polymer network (IPN) including a first polymer network in the form of a porogenic support fabric composed of linear polymers in the form of a pre-formed network comprising non-woven fibers, and a second polymer network synthesized, gelated, and/or cross-linked in the presence of the first polymer network. In the production of the IPN, a portion of the fibers of the first polymer network are removed to form pores that are substantially cylindrical in shape since the removed fibers have a minimum length of about 1.0 millimeter. Like in US 7,479,223 B2, the mandatory presence of fleece fibers also limits the maximum possible amount of binding polymer and has a negative effect on the binding capacity. In addition, the use of non-woven fibers to dissolve them as a process for forming cylindrical pores causes a significantly higher tortuosity which, as a person skilled in the art knows, results in lower permeability at comparable pore size diameters.

US 2011/0120947 A1 describes a crosslinked cellulose hydrate membrane used for chromatography processes, the crosslinked cellulose hydrate membrane having a porous double structure consisting of "micropores" and "ultrapores". The membrane of US 2011/0120947 A1 mandatorily consists of cellulose acetate which, in the manufacturing process, leads through swelling and saponification of this material to a material that has convective and diffusive components. However, these materials consisting of regenerated cellulose are not self-gelling materials or phases that are constituted by self-gelling materials, and the diffusive pores that are present in such materials are very small and difficult to control.

US 7,316,919 B2 describes a composite material of a porous support and a non-self supporting crosslinked gel derived from a radical polymerization reaction that contains "macropores" between 10 and 3000 nm and is located inside the pores of the support structure. However, these materials are limited in their maximum gel porosity and convective porosity. In addition, the porosity and pore size distribution in the composite material is hard to control both due to the nature of synthetic polymer gels. Like in US 7,479,223 B2 and US 8,298,657 B2 described above, the presence of a support material significantly reduces the number of binding polymers, thereby massively impairing both permeability and possible binding capacity of such composite materials.

In view of the above, the technical problem underlying the present invention is to provide a chromatographic material with which chromatographic processes can be carried out more quickly and more efficiently, as well as to provide a method of producing said chromatographic material.

The solution to the above technical problem is achieved by providing the embodiments characterized in the claims.

In particular, there is provided a chromatographic material comprising a polymer network material-based self-supporting bi-continuous separation matrix comprising a first continuous phase and a second continuous phase, the chromatographic material optionally comprising a third inert phase, wherein the first continuous phase is a portion of the matrix which is formed by a self-gelled polysaccharide and wherein the second continuous phase is a portion of the matrix which defines non-cylindrical large diameter continuously connected convective pores in-between the first continuous phase, wherein the large diameter continuously connected convective pores have a median pore diameter of from 0.1 $\mu$m to 6.0 $\mu$m, and wherein the third inert phase does not constitute the structure of the second continuous phase.

The chromatographic material of the present invention comprises a separation matrix which is a self-supporting separation matrix. As used herein, the expression "self-supporting separation matrix" means that the separation matrix, due to its continuous connected gel structure, is inherently dimensionally stable, and can be generated and handled without the need of an inert substrate as a supporting substrate. This does not exclude the possibility to introduce a third inert phase as a reinforcing substrate if needed for further enhanced mechanical strength or elevated ease of handling or integration into a chromatographic device.

The self-supporting matrix of the chromatographic material of the present invention has a bi-continuous structure. As used herein, the expressions "bi-continuous" or "bicontinuous" mean that the separation matrix has a structure which comprises two voluminous (mostly) continuous phases that penetrate each other and are each (mostly) continuous (interconnected) in themselves. Thus, at least 90%, preferably at least 95%, and more preferably at least 98% of the volume elements within a (mostly) continuous phase can be reached from any point within this voluminous phase without leaving this phase. According to a particular preferred embodiment of the present invention, every volume element within a continuous phase can be reached from any point within this voluminous phase without leaving this phase. This can be seen in 3D structures of the separation matrix by inspecting a volume element visually of at least $64*10^3$ $\mu$m$^3$. How to obtain 3D structures by Confocal Laser Scanning Microscopy is known to a person skilled in the art of the present technical field and an example thereof can be found in the scientific publication of Ley et. al, Journal of Membrane Science, Volume 564, 2018, Pages 543-551 (Page 545).

The first continuous phase of the separation matrix of the chromatographic material of the present invention is a portion of the matrix which is formed by a self-gelled polysaccharide, i.e. the first continuous phase comprises at least 90% of a self-gelled polysaccharide, preferably at least 95%, more preferably at least 98%, and more preferably at least 99%. According to a particularly preferred embodiment, the first continuous phase comprises 100% of a self-gelled polysaccharide, i.e. the first continuous phase consists of a self-gelled polysaccharide. The first continuous phase typically has small diameter diffusion pores in a molecular dimension of about 10 to 500 nm. The first phase is (mostly) continuously connected, i.e. at least 90%, preferably at least 95%, and more preferably at least 98% of the volume elements within the first phase can be reached from any point within the first phase without leaving the first phase. According to a particular preferred embodiment of the present invention, every volume element within the first phase can be reached from any point within the first phase without leaving the first phase.

As used herein, "gelling" is the process in which a polymer solution, particularly a polysaccharide solution, solidifies and therefore forms a polymer gel in which a solvent (such as e.g. water or glycerin) is filling the porous space inside the polymer gel. The solvent may improve the (storage) stability of the gel. For a self-gelling/self-gelled polymer/polysaccharide gel, no external or additional polymer or monomer or cross linker has to be involved to form the physical or covalent bonds that are leading to the polymer/polysaccharide gel formation.

The self-gelled polysaccharide (having small diameter diffusion pores) is porous, i.e. the polysaccharide has at least 20% porosity. The pores within the self-gelled polysaccharide are small diameter diffusion pores typical to polysaccharide gels. Porosity as used herein is defined as the volume of the material filled by a gas or a liquid ($V_{gas\ or\ liquid\ or\ both\ in\ parts}$) divided by the whole volume of the material including the solid volume ($V_{total\ gas+liquid+solid}$).

$$porosity = \frac{V_{gas\ or\ liquid\ or\ both\ in\ parts}}{V_{total\ gas+liquid+solid}}$$

According to a preferred embodiment of the present invention, the self-gelling/self-gelled polysaccharide is one or more selected from the group consisting of agarose, agar, agaropectin, kappa-carrageenan, iota-carrageenan, lambda-carrageenan, gellan gum, amylose, curdlan, alginate and rhamsan gum. These self-gelling/self-gelled polysaccharides advantageously allow to form a separation matrix having small pores and large pores, i.e. a structure having small diameter diffusion pores and large diameter convective pores (double porous structure), by using a single emulsion during preparation. Moreover, said hydrophilic polysaccharides exhibit low non-specific binding. According to a particularly preferred embodiment of the present invention, the self-gelling/self-gelled porous polysaccharide is agarose.

The second continuous phase of the separation matrix of the chromatographic material of the present invention is a portion of the matrix which defines non-cylindrical large diameter continuously connected convective pores in-between the first continuous phase. The non-cylindrical large diameter convective pores are (mostly) continuously connected (interconnected), i.e. at least 90%, preferably at least 95%, and more preferably at least 98% of the pores of the non-cylindrical large diameter convective pores can be reached from any point of another pore of the non-cylindrical large diameter convective pores by moving only through non-cylindrical large diameter convective pores. According to a particularly preferred embodiment of the present invention, any pore of the non-cylindrical large diameter convective pores can be reached from any point of another pore of the non-cylindrical large diameter convective pores by moving only through non-cylindrical large diameter convective pores. The non-cylindrical large diameter convective pores are in-between the first continuous phase (the self-gelled polysaccharide), i.e. the self-gelled polysaccharide forms porous gel bridges around the non-cylindrical large diameter convective pores. Said large diameter convective pores are non-cylindrical, i.e. said pores are substantially spherical wherein parts of the substantially spherical pores typically overlap in order to form a continuous convective pore structure.

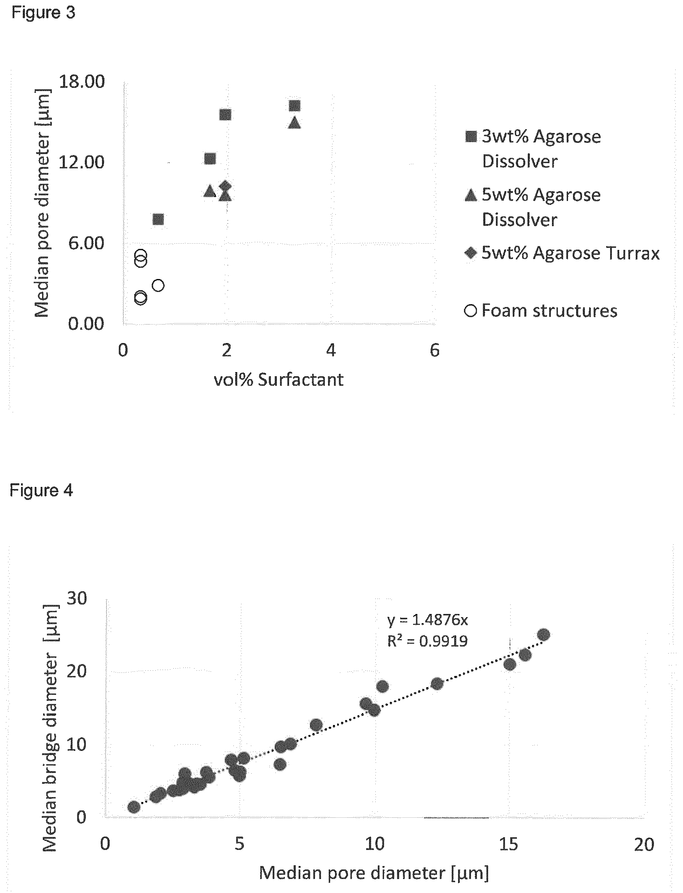

According to the present invention, the non-cylindrical large diameter continuously connected convective pores have a median pore diameter of from 0.1 $\mu$m to 6.0 $\mu$m. Heretofore, no chromatographic material comprising a polymer network material-based self-supporting bi-continuous separation matrix without an inert phase as supporting material for constituting the second continuous (pore) phase of the separation matrix has been described in the art that has such small non-cylindrical continuously connected large diameter convective pores, since no suitable method for preparing such chromatographic material was known. The median pore diameter may e.g. be determined as the median value of all pore data from the method in the scientific publication of Ley et. al, Journal of Membrane Science, Volume 564, 2018, Pages 543-551 (Page 546-548). Preferably, the median pore diameter is from 0.5 $\mu$m to 5.0 $\mu$m, most preferred from 1.0 $\mu$m to 3.0 $\mu$m. Since the non-cylindrical continuously connected large diameter convective pores have a median pore diameter within the above range, the diffusive path length is also small (cf. Figure 4) and the small diameter diffusive pores within the porous bridges are accessible within very short diffusion times, advantageously allowing to operate chromatographic processes very quickly and efficiently.

Although the separation matrix of the chromatographic material of the present invention is a self-supporting inherently stable separation matrix, the chromatographic material of the present invention may also optionally comprise a third inert phase as a reinforcing material to even more strengthen the chromatographic material against external stresses such as pressure or damaging radiation. In case a third inert phase is present as a reinforcing material, the third inert phase does not constitute the structure of the second continuous phase of the separation matrix. That is, the third inert phase is randomly distributed in the polymer network material-based self-supporting bi-continuous separation matrix independently from the structure of the second continuous phase, and the pore structure of the second continuous phase does not follow the structure of the inert phase like in the chromatographic materials described in US 7,479,233 B2.

The third inert phase as an additional reinforcing material for the separation matrix in the chromatographic material of the present invention may facilitate production and use of the chromatography material due to increasing the stability of the separation matrix. The third inert phase acting as a reinforcing material is not particularly limited and may e.g. be fleece materials or nonwovens (drylaid, wetlaid, spunlaid, meltblown), wovens, fabrics, mesh fabrics, open cell foams, reticulated foams or other permeable porous materials. Commercially available reinforcing materials are e.g. nonwoven Novatexx 2465 from Freudenberg; nonwoven Reemay 2016 from Berry, and mesh fabric Sefar 07-200/35.

According to a preferred embodiment of the present invention, the chromatographic material additionally comprising a third inert phase has a ratio of the volume of the third inert phase to the total volume of the chromatographic material including the third inert phase of from 0.03 to 0.60, more preferred of from 0.05 to 0.40, most preferred of from 0.08 to 0.25. As used herein, the "volume of the third inert phase" (V) is the volume that is taken by the third inert phase. By knowing the density ($\varphi$) of the underlying material, the volume of the third inert phase (V) can be calculated from the mass (m) thereof:

$$V_{third\ inert\ phase} = \frac{m_{third\ inert\ phase}}{\varphi_{third\ inert\ phase}}$$

As used herein, the "total volume of the chromatographic material including the third inert phase" is the total volume of the physical dimensions of the chromatographic material including the third inert phase volume and the volume of the two continuous phases. Said total volume can be determined by measuring the outer dimensions like diameter and thickness of the chromatographic material, depending on its macroscopic appearance.

If the aforementioned volume ratio is below the above range, the stability enhancing effect of the third inert phase acting as reinforcing material may be diminished. If the aforementioned volume ratio is above the aforementioned range, the binding capacity and the permeability of the chromatographic material will be diminished.

The third inert phase acting as a reinforcing material preferably has one or more of the following properties:

- base stability, i.e. the reinforcing material resists 0.1N NaOH for at least 5 h, more preferably for at least 24 h, without significant degradation or loss of functionality;
- gamma stability, i.e. the reinforcing material resists at least 10 kGy, more preferably 25 kGy, most preferably 50 kGy, without significant degradation or loss of functionality;
- a tensile strength: > 5.2 MPa, preferred > 6,8 MPa (Tensile tests are performed using a 2.5 kN testing machine (ZWICK & ROLL). The temperature during measurements is 20 °C/room temperature. Tensile specimen are 150 mm long, 20 mm wide. Each specimen is placed centrally in the testing machine's specimen mounts. Pulling speed for all measurements is 50 mm/min. The value tensile strength is defined as the highest tensile strength at sample break (Rm).);
- compressibility: > 90% of the initial thickness remains. In order to measure the compressibility, the following method is used. Hereby the thickness is measured while a defined pressure is on the material, and over time the reduction of thickness is measured. Thickness measurements were carried out with an Universal Micrometer (FRANK PTI GmbH). A round push rod with an area of 10 cm$^2$ is used as specimen mount. Round samples of 47 mm diameter are placed between the plate and the push rod. For a compressibility measurement thickness is measured by the compression of a weight of 1 kg that is placed on top of the push rod while monitoring the sample's thickness for 5 min. Compression is calculated by:

$$Compression\ [\%] = \frac{thickness\ after\ compression\ with\ 1Kg}{thickness\ before\ compression\ with\ 1Kg} \cdot 100$$

- a homogeneity in thickness and density of at most 10% variation around the mean value.

Due to the presence of an additional reinforcing material, the processability (rinsing, impregnation, drying of roll material) in the x/y direction of the separation matrix can be advantageously increased since the force absorption without significant length change (elongation) in the pull direction for possible production/modification processes (weaving processes) can be increased when compared to an embodiment without reinforcing material. In addition, the choice of material of the reinforcing material (e.g. a thermoplastic resin) can ensure an improved attachment of the separation matrix to thermoplastic device parts of a chromatography unit. Accordingly, the manufacturability of an integrated chromatography device can be improved by an additional reinforcing material.

According to a preferred embodiment of the present invention, the median bridge diameter of the first continuous phase is from 0.4 to 4 times larger than the median pore diameter of the non-cylindrical large diameter continuously connected convective pores. This ratio is strongly dependent on the convective porosity $\varepsilon$ (e.g. in case $\varepsilon = 0.33$ (i.e. at a convective porosity of 33%) so that $4.4 \cdot e^{-0.03 \cdot (\varepsilon \cdot 100)}$ is equivalent to a bridge to pore ratio of 1.63), as described by the following equation.

$$bridge\ to\ pore\ ratio = \frac{median\ bridge\ diameter\ [\mu m]}{median\ pore\ diameter\ [\mu m]} = 4.4 \cdot e^{-0.03 \cdot (\varepsilon \cdot 100)}$$

As used herein, the median bridge diameter is defined as the median value of all pore data from the method in scientific publication Ley et. al, Journal of Membrane Science, Volume 564, 2018, Pages 543-551, when the phases for the binary structure where inverted (1 goes 0 and vice versa) (cf. Pages 546-548 thereof). Preferably, the median bridge diameter of the first continuous phase is from 1 to 3 times larger than the median pore diameter of the non-cylindrical large diameter continuously connected convective pores, more preferably from 1 to 2 times larger. A ratio outside of the above range may negatively affect the surface accessibility, and thus also the binding or process time.

According to a preferred embodiment of the present invention, when a convective porosity $\varepsilon$ is the ratio of the volume of the second continuous phase to the total volume of the first and second continuous phase, the convective porosity $\varepsilon$ is from 0.05 to 0.7, more preferred from 0.05 to 0.5, and most preferred from 0.1 to 0.4. The convective porosity $\varepsilon$ can be determined by inverse size exclusion chromatography as known by a person skilled in the art and shown exemplary in a modified form in Guan, Hong & Guiochon, Georges (1996) "Study of physico-chemical properties of some packing materials" (Journal of Chromatography A - J CHROMATOGR A. 731. 27-40. 10.1016/0021-9673(95)01197-8). As used herein, the "total volume of the first and second continuous phase" refers to the sum of the volume of the first phase and the volume of the second phase, without taking an optional inert third phase (and its volume) in the chromatographic material of the present invention into account. If the convective porosity is smaller than the above-defined range, the permeability of the chromatographic material may decrease due to the presence of a larger amount of polysaccharide material in the chromatographic material. If the convective porosity is larger than the above-defined range, the binding capacity of the chromatographic material may decrease due to the presence of a smaller amount of polysaccharide material in the chromatographic material.

According to a preferred embodiment of the present invention, the chromatographic material of the present invention has a permeability of at least $0.31 \times (\varepsilon \times 100)$ mD (milliDarcy), more preferred at least $1.52 \times (\varepsilon \times 100)$ mD and most preferred at least $3.1 \times (\varepsilon \times 100)$ mD, wherein $\varepsilon$ is the convective porosity as defined above. Accordingly, when the convective porosity $\varepsilon$ is 0.33 (i.e. a convective porosity of 33%), the chromatographic material of the present invention preferably has a permeability of at least 10.2 mD, more preferably at least 50.2 mD, and most preferably at least 102 mD. The permeability strongly depends on the convective porosity $\varepsilon$. This is accessible through geometrical considerations. At constant median pore diameter and a higher convective porosity, a higher number of pores has to be present and therefore a higher volume flow at constant pressure. For smaller convective porosities vice versa. The permeability may e.g. be determined as described in scientific publication Ley et. al, Journal of Membrane Science, Volume 564, 2018, Pages 543-551 (page 547: description; page 545: measurement). The higher the permeability is, the smaller the required process pressure in chromatographic processes using the chromatographic material is. This advantageously allows greater column lengths and greater bed heights in chromatographic processes and therefore lower axial dispersion. Moreover, determination of the permeability is also a method to confirm a bi-continuous structure of the separation matrix since a permeability of lower than $0.31 \times (\varepsilon \times 100)$ mD (e.g. 10.2 mD at a convective porosity of 33% (i.e. $\varepsilon = 0.33$)) is a strong indication of the absence of a continuous convective phase.

According to a preferred embodiment of the present invention, the coefficient of variance of the median pore diameter of the non-cylindrical large diameter continuously connected convective pores is at most 0.8, more preferred at most 0.7. As used herein, the coefficient of variance of the median pore diameter is the standard deviation of the median pore diameter divided by the mean value of the median pore diameter. The "standard deviation" of the median pore diameter may be determined by using the Microsoft Excel function "STABW.N" which calculates the standard deviation based on a population specified as arguments (logical values and text are ignored). The standard deviation is a measure of the dispersion of values with respect to their mean (the mean). If the coefficient of variance of the median pore diameter of the non-cylindrical large convective pores is higher than the above maximum, the performance of the chromatographic material in a chromatographic process may decrease, i.e. earlier breakthrough curves, broader elution peaks and smaller chromatographic resolution may occur.

According to a preferred embodiment of the present invention, the coefficient of variance of the median bridge diameter of the first continuous phase is at most 0.7, more preferred at most 0.6. As used herein, the coefficient of variance of the median bridge diameter is the standard deviation of the median bridge diameter divided by the mean value of the median bridge diameter. The standard deviation of the median bridge diameter is determined analogously to the method described above for the standard deviation of the median pore diameter. If the coefficient of variance of the median bridge diameter of the first continuous phase is higher than the above maximum, it may occur that the binding sites of the separation matrix cannot be fully utilized, leading to earlier breakthrough and broader elution peaks in chromatographic processes.

According to a further preferred embodiment of the present invention, the separation matrix of the chromatographic material of the present invention has a specific interface between the first and the second continuous phases of at least 0.04 m$^2$/mL (wherein the volume mL refers to the separation matrix volume without the optional third inert phase/reinforcing material), more preferred more than 0.1 m$^2$/mL and most preferred more than 0.2 m$^2$/mL. The specific interface between the first and the second continuous phases can be determined by the following equation if the tortuosity is 2.5. If the tortuosity is different from this exemplary but typical tortuosity than the permeability changes by a factor that the then observed tortuosity differs from 2.5 to higher permeabilities (for lower tortuosities) or lower permeabilities (for higher tortuosities) like it is known to a person skilled in the art and given in the following equation (cf. also the scientific publication Berg et. al, Transport in Porous Media, 2014, Page 10, https://arxiv.org/pdf/1505.02424.pdf).

$$Interface_{specific} = (-37.868\,\epsilon^5 + 75.428\,\epsilon^4 - 66.017\,\epsilon^3 + 34.08\,\epsilon^2 - 2.7346\,\epsilon + 0.1333) \cdot Permeability^{-0.5}$$

$$Permeability_{with\ tortuosity\ different\ than\ 2.5} = \frac{Permeability_{with\ a\ tortuosity\ of\ 2.5}}{\dfrac{tortuosity}{2.5}}$$

If the specific interface between the first and the second continuous phases is below 0.04 m$^2$/mL, the interface for the transition into the small diameter diffusion pores may be too small such that less components (target substances and/or contaminants) may diffuse into the first continuous phase. Accordingly, the mass transport and thus the binding capacity may be limited while the diffusion time remains the same, leading to either smaller binding capacity or longer process times.

The shape of the chromatographic material, independent of the presence of the optional third inert phase, is not particularly limited. Accordingly, the chromatographic material may be e.g. in the shape of a flat sheet (membrane) or hollow fibre membrane, monolith or particles.

A further aspect of the present invention relates to a method of producing the chromatographic material of the present invention. Each of the embodiments described above also applies for the chromatographic material produced by the method of the present invention.

In particular, there is provided a method of producing the chromatographic material comprising a polymer network material-based self-supporting bi-continuous separation matrix of the present invention, wherein the first continuous phase is formed by a self-gelled polysaccharide, the method comprising the steps of:

(a) preparing a solution (A) comprising a self-gelling polysaccharide and a first solvent;
(b) preparing a solution (B) comprising at least one surfactant and a second solvent which is an immiscible solvent to solution (A);
(c) combining solution (A) and solution (B) to produce a combined solution (C);
(d) emulsifying the combined solution (C) at a condition to allow the self-gelling polysaccharide to remain in solution in the first solvent as solution (A) to obtain an emulsion which is in form of a solution (B)-in-solution (A)-emulsion; and
(e) allowing solution (A) containing the self-gelling polysaccharide to solidify by gelation at a certain condition to form the chromatographic material which comprises the separation matrix comprising the self-gelled polysaccharide as the first continuous phase.

In step (a) of the method of the present invention, a solution (A) comprising a self-gelling polysaccharide and a first solvent is prepared. The first solvent is not particularly limited and every solvent in which the self-gelling polysaccharide is soluble (at room temperature or at elevated temperature) can be used. The first solvent may also be a mixture of two or more of such solvents. According to a preferred embodiment, the first solvent is water. Solution (A) may be prepared by stirring and heating the self-gelling polysaccharide and the first solvent (to e.g. 30 °C or more, 40 °C or more, 50 °C or more, 60 °C or more, 70 °C or more, 80 °C or more, or 90 °C or more) for a predetermined time (e.g. 2 min or more, 5 min or more, 10 min or more, 15 min or more) until the self-gelling polysaccharide is (completely) dissolved in the first solvent.

The concentration of the self-gelling polysaccharide is not particularly limited. According to a preferred embodiment, the concentration of the polysaccharide in solution (A) is from 0.5 to 8 wt%, preferably from 1 to 6 wt%, and most preferably from 2.5 to 5 wt%. If the concentration is below the above range, the gelling ability of the self-gelling polysaccharide may not be sufficient, which may lead to deterioration of the stability of the polysaccharide gel. If the concentration is above the aforementioned range, unwanted size exclusion of a target component to be bound in a chromatography process and/or exceedingly low diffusive mass transfer into the gel may occur.

In step (b) of the method of the present invention, a solution (B) comprising at least one surfactant and a second solvent which is an immiscible solvent to solution (A) is prepared. As used herein, "immiscible" means that the solubility of a solvent in another solvent is less than 100 g/L at 70 °C, preferably less than 50 g/L at 70 °C, and most preferably less than 10 g/L at 70 °C.

The second solvent may be a single solvent or a mixture of two or more solvents. At least one solvent of the second solvent is an immiscible solvent to solution (A). According to a preferred embodiment of the present invention, the second solvent is one or more selected from C$_{4-12}$ alcohols (e.g. 1-hexanol, 2-heptanol, 1-octanol, 1-nonanol, 1-decanol, 1-dodecanol), C$_{4-12}$ isoalcohols, alkanes (e.g. octane and decane), silicone oils having a viscosity of from 4 to 200 cP, and natural oils having a viscosity of from 4 to 200 cP, or mixtures thereof. Silicone oils may e.g. be polydimethylsiloxanes (e.g. Silicone oil 20 cP from Wacker). Natural oils may e.g. be olive oil, sunflower oil or rapeseed oil. Particularly preferred embodiments of the second solvent are octane, decane, 1-octanol, 1-decanol and 1-dodecanol. The most preferred second solvent is decanol, particularly 1-decanol. Solution (B) may be e.g. prepared by stirring at room temperature or at elevated temperature, such as e.g. 30 °C or more, 35 °C or more, 40 °C or more, or 50 °C or more, for a predetermined time (e.g. 2 min or more, 5 min or more, 10 min or more, 15 min or more).

According to a preferred embodiment of the present invention, the at least one surfactant has an HLB value of from 8 to 16, preferably of from 10 to 14, and most preferably of from 11 to 13. The HLB (hydrophilic-lipophilic balance) of a surfactant is a measure of the degree to which it is hydrophilic or lipophilic, determined by calculating values for the different regions of the molecule, as described by Griffin ("Classification of Surface-Active Agents by 'HLB'", Journal of the Society of Cosmetic Chemists, 1949, 1 (5): 311-26); and "Calculation of HLB Values of Non-Ionic Surfactants", Journal of the Society of Cosmetic Chemists, 1954, 5 (4): 249-56) and Davies ("A quantitative kinetic theory of emulsion type, I. Physical chemistry of the emulsifying agent", Gas/Liquid and Liquid/Liquid Interface, Proceedings of the International Congress of Surface Activity, 1957, pp. 426-38). Taking tabulated or calculated values for the HLB values of single surfactants, HLB values of mixtures are determined by the mass fraction like e.g. in the following formula for a mixture of 2 surfactants where m is the mass of the surfactant used and HLB is the tabulated or calculated HLB value for the specific surfactant.

$$HLB_{mixture(of\ 2\ surfactants)} = \frac{m_1 \cdot HLB_1 + m_2 \cdot HLB_2}{(m_1 + m_2)}$$

The smaller the HLB-value is, the smaller the resulting convective pore diameter and resulting bridge diameter are. The HLB value is an independent parameter with respect to the volume of the polysaccharide phase (first continuous phase) and the polysaccharide concentration. If the volume ratio of the two continuous phases (first continuous phase and second continuous phase) is used to control the pore size, it also changes the convective porosity and consequently also the permeability. If the polysaccharide concentration is used to control the pore size of the second continuous phase (pore phase), the first continuous phase (polysaccharide phase / diffusive phase) is also changed. For example, when using 1-decanol as organic solvent, at higher polysaccharide concentrations, the convective pores become larger and, at the same time, the diffusive pores become smaller which may lead to exclusion of larger molecules and reduced diffusive mass transport. Conversely, again using 1-decanol as organic solvent, at lower polysaccharide concentrations, the convective pores become smaller and the diffusive pores become larger, which improves mass transport but also reduces the surface area for possible binding of target components to the separation matrix in a chromatography process. By using the above HLB-value range, it is advantageously possible to influence the convective pore size without these effects.

In view of the above, the HLB-value of the at least one surfactant is preferably within the above HLB-value range, and the at least one surfactant is further capable of generating a bi-continuous structure. Moreover, the use of at least one surfactant preferably yields an interfacial tension between both liquid phases in an emulsion of at most 1 mN/m, and is preferably non-ionic. Surface tensions between two phases were measured with a goniometer OCA 15Pro and the pendant drop method. The needle of a syringe filled with a liquid phase A, exemplary water, but all other solutions and mixtures are possible, was placed into a liquid phase B, exemplary any organic solvent that is immiscible with water, but all other solutions and mixture of liquids are possible. A droplet of phase A was dispensed in phase B, either by volume, e.g. 10 µL, or continuously with a dispense rate of e.g. 1 µL/s, and recorded with a camera placed 90° to the needle. From the curvature of the droplets and the diameter of the needle, surface tensions between phases A and B were calculated with the software SCA 22 - surface/interfacial tension from Dataphysics Instruments (cf. F. K. Hansen, G. Rodsrud, Surface Tension by Pendant Drop, Journal of Colloid and Interface Science, Vol. 141, No. 1, 1991).

Preferred surfactants are polysorbates and/or $C_{2-150}$ fatty acid esters of sorbitol, such as e.g. commercially available Tween 20/60/80 (Tween 20: polyoxyethylene sorbitan mono-laurate; Tween 80: polyoxyethylene sorbitan mono-oleate) or Span 20/60/80/85. According to the present invention, one single surfactant or a combination of two or more surfactants may be used. According to a particularly preferred embodiment, two different surfactants are used in combination.

For manufacturing a bi-continuous structure (and not a foam structure), a minimum surfactant concentration has to be used depending on the used organic solvent and on the polysaccharide concentration. For example, based on the volumetric ratio of the total volume of the solvents (i.e. both of the first and second solvent) and the surfactant(s), the preferred amount of surfactant is calculated by the formula given below and describes only the percentage of surfactant that is at least present in solution (B), and the preferred amount is at least 2.5 vol% for 1-dodecanol, at least 4.5 vol% for 1-decanol, at least 7.5 vol% for 1-nonanol, at least 7.5 vol% for 1-octanol, at least 15 vol% for 1-hexanol, at least 7.5 vol% for 2-heptanol, at least 2 vol% for cyclohexane, at least 3 vol% for octane, at least 2.5 vol% for decane, and at least 7 vol% for silicone oil (PDMS). This surfactant concentration is hereby calculated in dependence on the total amount of organic phase used by be following equation. The higher the total amount of organic phase the higher the total amount of surfactant needed.

$$surfactant\ concentration\ [in\ vol\%] = \left(\frac{v_\%surfactant}{v_\%organic\ solvent}\right) \times 100$$

The above surfactant concentrations (depending on the organic solvent) are particularly preferably used in case the concentration of the polysaccharide in solution (A) is from 2.5 to 5 wt%.

In step (c) of the method of the present invention, solution (A) and solution (B) are combined to produce a combined solution (C). Step (c) may be carried out at room temperature or at elevated temperature, such as e.g. 30 °C or more, 35 °C or more, 40 °C or more, or 50 °C or more. According to a preferred embodiment, the volume ratio of the second solvent in the combined solution (C) in step (c) is from 10 to 70 vol% since in this range a suitable emulsion can be generated in step (d) of the present invention.

In step (d) of the method of the present invention, the combined solution (C) is emulsified at a condition to allow the self-gelling polysaccharide to remain in solution in the first solvent as solution (A) to obtain an emulsion which is in form of a solution (B)-in-solution (A)-emulsion. According to a preferred embodiment of the present invention, step (d) is carried out by exposing the combined solution (C) to a shear force by (vigorously) stirring, dispersing or homogenising, e.g. with a Turrax Specification: T25 digital ULTRA-TURRAX®, Model T25D, Firma IKA (at 10.000 to 20.000 rpm) or EUROSTAR 40 digital from IKA with a dispersing disk of type R1303 Dissolver Stirrer (at 1.000 rpm to 2.000 rpm). Vigorously stirring, dispersing or homogenising advantageously enables to generate non-cylindrical large diameter continuously connected convective pores having a median pore diameter of from 0.1 $\mu$m to 6 $\mu$m.

In step (e) of the method of the present invention, solution (A) containing the self-gelling polysaccharide is allowed to solidify by gelation at a certain condition to form the chromatographic material which comprises the separation matrix comprising the self-gelled polysaccharide as the first continuous phase. Allowing the self-gelling polysaccharide to solidify by gelation at a certain condition, is e.g. realized by cooling the solution (B)-in-solution (A)-emulsion to a temperature below the gelling temperature of the polysaccharide, e.g. cooling to at most 45 °C, at most 40 °C, at most 35 °C, at most 30 °C or at most 25°C. In other embodiments, the solidification is realized e.g. by addition of e.g. potassium salts to the solution (B)-in-solution (A)-emulsion. According to a preferred embodiment of the present invention, step (e) is performed by pouring the emulsion on a casting form and cooling the emulsion below the gelling point. As used herein, a "casting form" is any surface onto which the emulsion can be given/poured to solidify, and preferably this surface is a metal surface that can be cooled down quickly, and most preferably this surface is heatable and coolable in a range of from 0 °C to 100 °C. The cooling rate is not particularly limited, and usually a cooling rate of from 0.01 °C/sec to 50 °C/sec is used. According to a preferred embodiment of the present invention, the cooling rate is from 0.2 °C/sec to 30 °C/sec, particularly preferred from 1 °C/sec to 20 °C/sec.

In case the chromatographic material is intended to also comprise a third inert phase acting as a reinforcing material, the third inert phase is preferably present in step (e) of the method of the present invention to introduce the third inert phase (randomly) into the separation matrix. That is, it is preferred that the solution (B)-in-solution (A)-emulsion of step (d) is poured onto a reinforcing material (third inert phase) in step (e) and the solution (A) is allowed to solidify by gelation in the presence of the third inert phase.

According to a particularly preferred embodiment of the method of the present invention, the self-gelling polysaccharide is agarose, and the method comprises the steps of:

(a) preparing the solution (A) comprising the agarose and water by heating an agarose-in-water-suspension to at least 90°C for at least 15 minutes to solve the agarose in the water;

(b) preparing the solution (B) comprising the at least one surfactant and the second solvent which is a water-immiscible organic solvent and heating solution (B) to a temperature above the gelation temperature of the used agarose (e.g. at least 40°C);

(c) combining solution (A) and solution (B) at a temperature above the gelation temperature of the used agarose (e.g. at least 40°C) to produce a combined solution (C);

(d) emulsifying combined solution (C) at a temperature above the gelation temperature of the used agarose (e.g. at least 40°C) to allow the agarose to remain in solution in the first solvent as solution (A) to obtain an emulsion which is in form of a solution (B)-in-solution (A)-emulsion; and

(e) allowing solution (A) containing the self-gelling agarose to solidify by gelation at a temperature below the gelation temperature of the used agarose (e.g. below 35°C) to form the chromatographic material which comprises the separation matrix comprising the self-gelled agarose as the first continuous phase.

The separation matrix may optionally be modified by introducing functional groups and/or ligands such as e.g. anionic ligands, cationic ligands, hydrophobic ligands, mixed mode ligands (for example two or more functionalities like e.g. cationic and hydrophobic), affinity ligands, etc. Such modifications by introducing functional groups and/or ligands is well-known to those skilled in the art.

According to the present invention, it is advantageously possible to provide a chromatographic material comprising a polymer network material-based self-supporting bi-continuous separation matrix having both diffusion pores and convective pores, the convective pores having a very small size when compared to separation matrices known in the prior art. Due to the small convective pores, the diffusive path length is also rather small and the diffusive pores within the porous bridges of the separation matrix are accessible within very short diffusion times. Moreover, the chromatographic material of the present invention shows, compared to purely convective matrices, a high permeability due to its specific structure, thus leading to a smaller process pressure when using the chromatographic material in chromatographic processes. This advantageously allows longer column lengths in chromatographic processes und lower axial dispersion. In view of the above, the chromatographic material of the present invention advantageously allows to operate chromatographic processes very quickly and efficiently by excellent accessibility of the binding sites, late breakthrough curves and narrow elution peaks, and thus the separation matrix of the present invention is particularly suited for diffusion limited processes that need high binding capacities, as e.g. observed in bind and elute applications of large proteins, virus particles and the like.

The Figures show:

Figure 1 shows a comparison of the convective and diffusional flow paths in polysaccharide particles and polysaccharide membranes.

Figure 2 shows the relationship between the permeability and the median diameter of the convective pores (at $\varepsilon = 0.33$ convective porosity) for bi-continuous and closed-cell foam structures (Example 1).

Figure 3 shows the relationship of the median pore diameter and the used surfactant concentration (at $\varepsilon = 0.33$ convective porosity) in the preparation of chromatographic materials in accordance with the reaction conditions (process parameters) described in US 5,723,601 A (Example 1).

Figure 4 shows the proportionality of the median bridge diameter and the median pore diameter (at $\varepsilon = 0.33$ convective porosity) of the non-cylindrical large diameter continuously connected convective pores for selected examples of Table 2 (Example 2).

Figure 5 shows a device for determining DBC 10%.

Figure 6 shows a relationship between the median bridge diameter of the separation matrix and the dynamic binding capacity (at $\varepsilon = 0.33$ convective porosity) (Example 3).

Figure 7 shows a relationship between the coefficient of variance of the median bridge diameter of the first continuous phase and the dynamic binding capacity (at $\varepsilon = 0.33$ convective porosity) (Example 4).

Figure 8 shows a relationship between specific interface between the first and the second continuous phases and the dynamic binding capacity (at $\varepsilon = 0.33$ convective porosity) (Example 5).

The present invention will be further illustrated in the following examples without being limited thereto.

**Examples**

General preparation example:

A self-gelling polysaccharide solution (e.g. 3% agarose in water) was prepared and stored at elevated temperature (e.g. 95 °C) until dissolved completely. Decanol (e.g. 27.39 g), Tween80 (e.g. 2.48 g) and Span80 (e.g. 0.98 g) were mixed and stirred at elevated temperature (e.g. 60 °C) to form an organic phase. The above self-gelling polysaccharide solution (e.g. agarose solution in an amount of 63.72 g) was poured into a beaker tempered in a water tub at 50 °C, and the organic phase was added slowly while stirring. The emulsion was rigorously stirred with an Ultraturrax (preferably) at 20.000 rpm and 70-75 °C for 10 min. Alternatively, the emulsion was rigorously stirred with an EUROSTAR 40 digital from IKA with a dispersing disk of type R1303 Dissolver Stirrer (preferably at 2.000 rpm). The temperature was observed during the emulsion process and the water tub cooled or warmed if needed to keep the emulsion temperature constant. In the meantime, the casting platform was prepared. For this, optional a sheet of fleece (third inert phase) acting as a reinforcing material was taped at both ends of the casting platform which was tempered at 40 °C by a stream of warm water from below. The same process also works without third inert phase (reinforcing material / fleece). The emulsion was poured onto the one end of the casting platform (in presence of fleece on the top of the fleece) and was spread with a scraper to obtain a layer of emulsion with a width of e.g. 300 $\mu$m. The casting platform was immediately cooled down to 15 °C using cold tap water from below. By this, gelation of the agarose was induced. After waiting for 1 to 2 minutes, the emulsion became a firm film (optional attached to the fleece). The membrane with or without reinforcing material / fleece was removed carefully from the casting platform and placed into a tub with running water to wash out the organic phase. After washing the membrane with running water for 20 min, it was gently shaken in isopropanol (2 x 10 min) and water/isopropanol mixture (50:50, 2 x 10 min), each step including a change of washing medium. Finally, the membrane was washed in running water for another 20 min.

For confocal microscopy analysis samples without reinforcing material / fleece proved to be the easiest way to obtain good microscope images. For this, a small hole with a diameter of 13 mm was cut into the fleece before casting the emulsion. The casting procedure was the same as stated above. Before the washing procedure, the membrane was cut out at that same hole and a membrane without fleece was obtained.

Ligand immobilization for an affinity ligand (Protein A) was carried out in a two-step process. In a first step, the activation is carried out with a bisoxirane molecule in case the matrix has functional groups that reacts with oxirane so that at least one oxirane group of the bisoxirane reacts with the matrix. The so created unreacted oxiranes on the matrix surface are then available for further surface chemistry.

The second step is carried out by adding the ligand to the activated matrix which has at least one reactive side with respect to the oxirane. This or similar possible methods can be found in A. Krishna Mallia, Paul K. Smith, Greg T. Hermanson, Immobilized Affinity Ligand Techniques, Elsevier Science, 1992.

Example 1: Preparation and characterization of chromatographic materials according to the present invention and of the prior art

According to the above general preparation example, chromatographic material Sample Nos. 1 to 33 were prepared under the conditions indicated in Table 1. The affinity ligand was introduced by dissolving the used protein A Ligand in 1M KPI buffer with 10 mg/mL in concentration at pH 7. After preparing this coupling solution the separation matrix was inserted in this coupling solution at room temperature for at least 16h. After this, the separation matrix was washed with 0.1M 1xPBS buffer at pH 7 and stored in this until usage.

In this Example and in the following Examples, the chromatographic materials were characterized with respect to

- Ligand density:
  Protein A Material: BCA assay, Literature: C. M. Stoscheck: Quantitation of protein. In: Methods in enzymology. Band 182, 1990, S. 50-68, PMID 2314256 IEX Material: Titration with e.g. NaOH or HCl as known to persons skilled in the art.

- Determination of SBC (static binding capacity):
  The SBC value is measured by a 12h incubation of the target molecule in binding buffer conditions and an elution step after washing in elution condition buffer for the target molecule for at least 1h. The concentration in the elution buffer is measured by UV-Vis at 280 nm within a calibration curve measured prior to the SBC measurement.

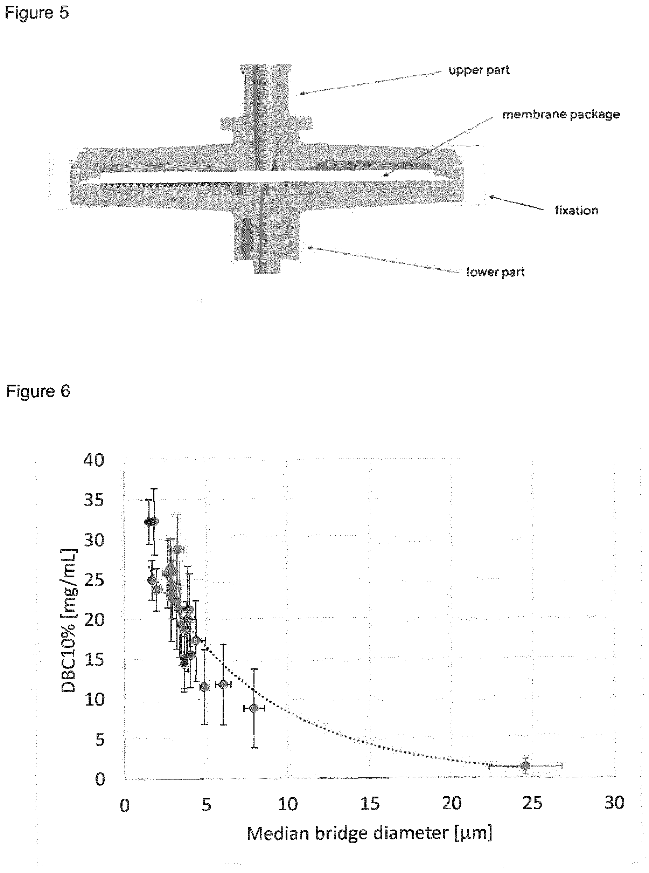

- Determination of DBC 10% (Dynamic binding capacity at 10% breakthrough): The DBC 10% is measured with an Akta Avant150 chromatography System from *GE-Healthcare*®. At first the described material is placed into an in-house measurement device (LP15, Figure 5) and connected to the Äkta Avant150 via luer-lock. Then at least 20 separation-matrix volumes (MV) of binding buffer were purged through the separation matrix. Then binding buffer with solved target protein (1mg/mL) is purged through the separation matrix until 10% of the concentration of the initial target protein solution is reached (0,1 mg/mL). This until then purged volume in mL is due to the concentration of 1 mg/mL equivalent with the mass in mg and gives the DBC 10% by dividing by the separation matrix volume to derive the DBC 10% in mg/mL.

- Determination of DBC 100% (Dynamic binding capacity at 100% breakthrough): The DBC 100% is measured with an Akta Avant150 chromatography System from *GE-Healthcare*®. At first the described material is placed into an in-house measurement device (LP15, Figure 5) and connected to the Akta Avant150 via luer-lock. Then at least 20 separation-matrix volumes (MV) of binding buffer were purged through the separation matrix. Then binding buffer with solved target protein (1mg/mL) is purged through the separation matrix until 100% of the concentration of the initial target protein solution is reached (1 mg/mL). The area under the so derived breakthrough curve can then be integrated and the DBC 100% can then be determined by the measured area, the needed volume to reach 100% of the initial concentration and the separation matrix volume in mg/mL.

Results of the characterization of the separation matrices are indicated in Table 2.

Table 1

| Sample No. | Structure Type | Emulsified by | Stirrer Speed | Organic phase | Agarose concentration | Aqueous phase | Organic phase | Surfactants total | Tween 80 | Span 80 | HLB |
|---|---|---|---|---|---|---|---|---|---|---|---|
| | | | [1/min] | | [wt.%] | [v%] | [v%] | [v%] | [v%] | [v%] | [-] |
| 1 | Bicontinuous | (A) | 2000 | Cyclohexane | 3 | 65.34 | 32.70 | 1.96 | 1.96 | 0.00 | 15.00 |
| 2 | Bicontinuous | (A) | 2000 | Cyclohexane | 3 | 64.02 | 32.70 | 3.28 | 3.28 | 0.00 | 15.00 |
| 3 | Bicontinuous | (A) | 2000 | Cyclohexane | 3 | 65.63 | 32.70 | 1.67 | 1.67 | 0.00 | 15.00 |
| 4 | Bicontinuous | (A) | 2000 | Cyclohexane | 3 | 66.63 | 32.70 | 0.67 | 0.67 | 0.00 | 15.00 |
| 5 | Bicontinuous | (B) | 10000 | Cyclohexane | 3 | 65.34 | 32.70 | 1.96 | 1.96 | 0.00 | 15.00 |
| 6 | Bicontinuous | (A) | 2000 | Cyclohexane | 5 | 65.34 | 32.70 | 1.96 | 1.96 | 0.00 | 15.00 |
| 7 | Bicontinuous | (A) | 2000 | Cyclohexane | 5 | 64.02 | 32.70 | 3.28 | 3.28 | 0.00 | 15.00 |
| 8 | Bicontinuous | (A) | 2000 | Cyclohexane | 5 | 65.63 | 32.70 | 1.67 | 1.67 | 0.00 | 15.00 |
| 9 | Bicontinuous | (A) | 2000 | Cyclohexane | 6 | 65.34 | 32.70 | 1.96 | 1.96 | 0.00 | 15.00 |
| 10 | Bicontinuous | (A) | 2000 | Cyclohexane | 8 | 65.34 | 32.70 | 1.96 | 1.96 | 0.00 | 15.00 |
| 11 | Foam | (A) | 2000 | Cyclohexane | 3 | 66.97 | 32.70 | 0.33 | 0.33 | 0.00 | 15.00 |
| 12 | Foam | (A) | 2000 | Cyclohexane | 6 | 66.97 | 32.70 | 0.33 | 0.33 | 0.00 | 15.00 |
| 13 | Foam | (A) | 2000 | Cyclohexane | 5 | 66.63 | 32.70 | 0.67 | 0.67 | 0.00 | 15.00 |
| 14 | Foam | (A) | 2000 | Cyclohexane | 5 | 66.97 | 32.70 | 0.33 | 0.33 | 0.00 | 15.00 |
| 15 | Foam | (A) | 2000 | Cyclohexane | 8 | 66.97 | 32.70 | 0.33 | 0.33 | 0.00 | 15.00 |
| 16 | Bicontinuous | (A) | 2000 | 1-Decanol | 3 | 63.72 | 33.00 | 3.28 | 2.30 | 0.98 | 11.97 |
| 17 | Bicontinuous | (A) | 2000 | 1-Decanol | 3 | 61.98 | 33.00 | 5.02 | 3.52 | 1.50 | 11.97 |
| 18 | Bicontinuous | (A) | 2000 | 1-Decanol | 4 | 63.72 | 33.00 | 3.28 | 2.30 | 0.98 | 11.97 |
| 19 | Bicontinuous | (A) | 2000 | 1-Decanol | 4 | 61.98 | 33.00 | 5.02 | 3.52 | 1.50 | 11.97 |
| 20 | Bicontinuous | (A) | 2000 | 1-Decanol | 4 | 65.33 | 33.00 | 1.67 | 1.17 | 0.50 | 11.97 |
| 21 | Bicontinuous | (B) | 20000 | 1-Octanol | 3 | 63.72 | 33.00 | 3.28 | 2.30 | 0.98 | 11.97 |
| 22 | Bicontinuous | (B) | 20000 | Decane | 3 | 68.20 | 30.00 | 1.81 | 1.30 | 0.54 | 12.03 |
| 23 | Bicontinuous | (B) | 20000 | Octane | 3 | 67.90 | 30.00 | 2.11 | 1.48 | 0.63 | 11.97 |
| 24 | Bicontinuous | (B) | 20000 | 1-Hexanol | 3 | 60.30 | 33.00 | 6.69 | 4.70 | 2.00 | 11.98 |

(continued)

| Sample No. | Structure Type | Emulsified by | Stirrer Speed | Organic phase | Agarose concentration | Aqueous phase | Organic phase | Surfactants total | Tween 80 | Span 80 | HLB |
|---|---|---|---|---|---|---|---|---|---|---|---|
| | | | [1/min] | | [wt.%] | [v%] | [v%] | [v%] | [v%] | [v%] | [-] |
| 25 | Bicontinuous | (B) | 20000 | 2-Heptanol | 3 | 62.00 | 33.00 | 5.02 | 3.50 | 1.50 | 11.96 |
| 26 | Bicontinuous | (B) | 20000 | Silicone oil (PDMS) 20cP Wacker | 3 | 63.70 | 33.00 | 3.28 | 2.30 | 0.98 | 11.97 |
| 27 | Bicontinuous | (B) | 20000 | 1-Decanol | 4 | 65.33 | 33.00 | 1.67 | 1.17 | 0.50 | 11.97 |
| 28 | Foam | (A) | 2000 | 1-Decanol | 4 | 66.33 | 33.00 | 0.67 | 0.47 | 0.20 | 11.97 |
| 29 | Foam | (A) | 2000 | 1-Decanol | 4 | 66.67 | 33.00 | 0.33 | 0.23 | 0.10 | 11.97 |
| 30 | Foam | (B) | 20000 | 1-Decanol | 4 | 66.33 | 33.00 | 0.67 | 0.47 | 0.20 | 11.97 |
| 31 | Foam | (B) | 20000 | 1-Decanol | 4 | 66.67 | 33.00 | 0.33 | 0.23 | 0.10 | 11.97 |
| 32 | Foam | (A) | 2000 | 1-Decanol | 3 | 66.33 | 33.00 | 0.67 | 0.47 | 0.20 | 11.97 |
| 33 | Foam | (A) | 2000 | 1-Decanol | 3 | 66.67 | 33.00 | 0.33 | 0.23 | 0.10 | 11.97 |

(A) R1303 Dissolver Stirrer; (B) T25 digital ULTRA-TURRAX®. Model T25D. Firma IKA

EP 4 019 125 A1

Table 2

| Sample No. | Permeability [mD] | Median Pore Diameter (Convective Pores) [µm] | Coefficient of Variance of Median Pore Diameter (Convective Pores) [-] | Median Bridge Diameter [µm] | Coefficient of Variance of Median Bridge Diameter [-] | Specific Interface between First and Second continuous phases [m²/mL] | Tortuosity [-] | DBC 10% Protein A-Membrane. IgG binding 5MV/min [mg/mL] |
|---|---|---|---|---|---|---|---|---|
| 1 | 1123.8 | 15.57 | 0.62 | 22.31 | 0.55 | 0.03 | 2.18 | |
| 2 | 1293.4 | 16.23 | 0.64 | 25.11 | 0.54 | 0.03 | 3.05 | |
| 3 | 826.0 | 12.30 | 0.56 | 18.31 | 0.50 | 0.04 | 2.01 | |
| 4 | 393.0 | 7.80 | 0.60 | 12.68 | 0.53 | 0.06 | 1.65 | |
| 5 | 563.8 | 10.26 | 0.51 | 17.93 | 0.49 | 0.01 | 1.67 | |
| 6 | 413.9 | 9.64 | 0.55 | 15.56 | 0.52 | 0.02 | 1.42 | |
| 7 | 912.8 | 15.01 | 0.63 | 21.02 | 0.58 | 0.03 | 1.49 | |
| 8 | 259.0 | 9.95 | 0.67 | 14.71 | 0.57 | 0.05 | 1.53 | |
| 9 | 112.2 | 6.85 | 0.49 | 10.07 | 0.44 | 0.02 | 1.79 | |
| 10 | 69.7 | 6.50 | 0.57 | 9.68 | 0.47 | 0.07 | 1.73 | |
| 11 | 10.0 | 5.13 | 0.58 | 8.12 | 0.50 | 0.10 | 1.57 | |
| 12 | 1.0 | 2.05 | 0.50 | 3.28 | 0.44 | 0.26 | 2.79 | |
| 13 | 6.2 | 2.88 | 0.46 | 4.78 | 0.45 | 0.20 | 2.86 | |
| 14 | 9.3 | 4.67 | 0.58 | 7.87 | 0.53 | 0.06 | 1.35 | |
| 15 | 1.0 | 1.88 | 0.52 | 2.80 | 0.39 | 0.29 | 3.28 | |
| 16 | 95.4 | 2.88 | 0.46 | 3.96 | 0.37 | 0.23 | 3.43 | |
| 17 | 150.0 | 3.54 | 0.43 | 4.53 | 0.43 | 0.20 | 1.60 | |
| 18 | 132.3 | 3.39 | 0.55 | 4.59 | 0.40 | 0.20 | 2.76 | 32.16 |
| 19 | 263.7 | 4.99 | 0.42 | 6.26 | 0.40 | 0.15 | 1.60 | 29.68 |
| 20 | 12.0 | 2.90 | 0.45 | 4.25 | 0.41 | 0.22 | 2.62 | 39.49 |
| 21 | 62.7 | 2.52 | 0.41 | 3.64 | 0.43 | 0.26 | 2.20 | 33.6 |
| 22 | 59.6 | 2.95 | 0.73 | 5.99 | 0.56 | 0.14 | 1.49 | 36.3 |

(continued)

| Sample No. | Permeability | Median Pore Diameter (Convective Pores) | Coefficient of Variance of Median Pore Diameter (Convective Pores) | Median Bridge Diameter | Coefficient of Variance of Median Bridge Diameter | Specific Interface between First and Second continuous phases | Tortuosity | DBC 10% Protein A-Membrane.IgG binding 5MV/min |
|---|---|---|---|---|---|---|---|---|
| | [mD] | [μm] | [-] | [μm] | [-] | [m$^2$/mL] | [-] | [mg/mL] |
| 23 | 150.7 | 3.76 | 0.45 | 6.18 | 0.45 | 0.16 | 4.37 | 26.85 |
| 24 | 21.3 | 1.05 | 0.35 | 1.39 | 0.35 | 0.37 | 1.89 | 29.61 |
| 25 | 114.0 | 2.76 | 0.43 | 3.76 | 0.45 | 0.25 | 1.95 | 31.06 |
| 26 | 175.2 | 2.93 | 0.44 | 4.40 | 0.44 | 0.22 | 1.71 | 29.3 |
| 27 | 40.0 | 3.30 | 0.52 | 4.13 | 0.39 | 0.21 | 3.29 | 44.86 |
| 28 | 6.4 | 3.86 | 0.64 | 5.52 | 0.41 | 0.16 | 4.05 | |
| 29 | 3.8 | 4.98 | 0.64 | 5.70 | 0.40 | 0.14 | 27.94 | |
| 30 | 9.9 | 3.11 | 0.53 | 4.61 | 0.42 | 0.21 | 2.70 | 9.65 |
| 31 | 8.2 | 6.46 | 0.72 | 7.27 | 0.38 | 0.10 | 4.83 | 5.96 |
| 32 | 3.5 | 3.32 | 0.64 | 4.40 | 0.38 | 0.20 | 3.03 | 11.38 |
| 33 | 2.0 | 4.80 | 0.70 | 6.44 | 0.42 | 0.14 | 3.60 | 9.93 |

Sample Nos. 1 to 15 are chromatographic materials prepared in accordance with the reaction conditions (process parameters) described in US 5,723,601 A. Sample Nos. 1 to 10 are bi-continuous separation matrices, but the non-cylindrical large diameter continuously connected convective pores of each of the separation matrices have a median pore diameter of more than 6 $\mu$m. As can be seen from Sample Nos. 1 to 5, less surfactant (at constant polysaccharide concentration) leads to smaller pore diameters of the convective pores. However, in Sample Nos. 11 to 15, in which the concentration of the surfactant falls under a certain threshold, a foam structure is obtained instead of a bi-continuous structure. The foams consist of partially more or less connected globular structures as convective phase (macropores) between the diffusive phase, i.e. the macropores are not interconnected. The inherently resulting poorer connectivity results in structures with a very low permeability at comparable pore size (i.e. the median diameter of the convective pores), since there is no through flow via these pores. Figure 2 shows the relationship between the permeability and the median diameter of the convective pores for bi-continuous and foam structures. Therefore, foam structures can only be traversed in a very inhomogeneous and inadequate manner, which results in disadvantages in the homogeneous distribution of fluid in the chromatographic medium and, in addition to the lower permeability, disadvantages in the dynamic binding due to inhomogeneous flow and thus inhomogeneous binding site accessibility.

Figure 3 shows the relationship of the median pore diameter and the used surfactant concentration in the preparation of chromatographic materials in accordance with the reaction conditions (process parameters) described in US 5,723,601 A. With the reaction conditions described in US 5,723,601 A, it is not possible to prepare a bi-continuous separation matrix with non-cylindrical large diameter continuously connected convective pores having a median pore diameter of from 0.1 $\mu$m to 6 $\mu$m.

Sample Nos. 16 to 27 are chromatographic materials according to the present invention, comprising bi-continuous separation matrices with non-cylindrical large diameter continuously connected convective pores having a median pore diameter of from 0.1 $\mu$m to 6 $\mu$m. The separation matrices show an excellent permeability, particularly when compared to the foams of Sample Nos. 11 to 15 which have similar median pore diameters of the convective pores. The chromatographic material of the present invention has excellent accessibility of the binding sites and dynamic binding capacity at 10% breakthrough.

Sample Nos. 28 to 33 are chromatographic materials prepared as Comparative Examples, in which the same solvent as in (inventive) Sample Nos. 16 to 20 and 27 was used, but the concentration of surfactant used in the preparation has been lowered below a certain threshold such that foam structures are formed. Sample Nos. 28 to 33 have convective pores having a median pore diameter similar to Sample Nos. 16 to 27, but the convective pores of foam structure Sample Nos. 28 to 33 are not continuously connected (interconnected) like the convective pores of Sample Nos. 16 to 27. Accordingly, when comparing the foam structures of Sample Nos. 28 to 33 with the bi-continuous structures of Sample Nos. 16 to 27, the foam structures shows a reduced permeability at comparable convective pore diameters. Moreover, the foam structures of Samples Nos. 30 to 33 show an inferior dynamic binding capacity at 10% breakthrough when compared with the bi-continuous structures of Sample Nos. 18 to 27.

Example 2: Relationship between the mean bridge diameter and the mean pore diameter of the large diameter convective pores

Separation matrices comprising a self-gelled porous polysaccharide as the first continuous phase were prepared and analyzed with respect to their mean bridge diameter and mean pore diameter of the large diameter convective pores. The results are depicted in Figure 4, which clearly shows the proportionality of the mean bridge diameter and the mean pore diameter of the large diameter convective pores. In particular, the bigger the large diameter convective pores become with a constant pore volume fraction (convective porosity), the bigger the bridges become because the bridges just represent the space between the large diameter convective pores.

Example 3: Relationship between DBC 10% of separation matrices and their median bridge diameter

Separation matrices comprising a self-gelled porous polysaccharide as the first continuous phase were prepared and analyzed with respect to their median bridge diameter and DBC 10% (dynamic binding capacity 10% breakthrough (ligand: affinity protein A; buffer: phosphate-buffered saline (PBS) pH 7.3; analyte 1 mg/mL monoclonal antibody (mAb) in PBS; velocity: 5 MV/min = 12 sec residence or contact time with or in the medium)). All data were derived by using flat sheet materials inside a device like shown in Figure 5 (called LP15) and were measured with an Äkta® Avant150.

The results are depicted in Figure 6, which clearly shows that when keeping the process parameters constant (contact and process time). the larger the median bridge diameter of the separation matrix is. the smaller also the dynamic binding capacity is.

<u>Example 4</u>: Relationship between DBC 10% of separation matrices and their coefficient of variance of the median bridge diameter of the first continuous phase

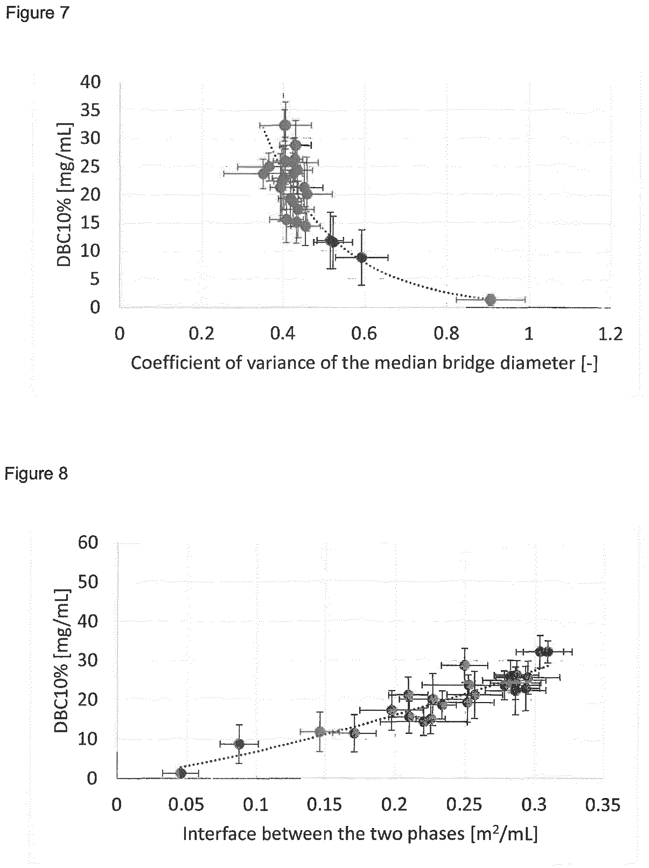

Separation matrices comprising a self-gelled porous polysaccharide as the first continuous phase were prepared and analyzed with respect to their variance of the median bridge diameter of the first continuous phase and DBC 10% (ligand: affinity protein A; buffer: phosphate-buffered saline (PBS) pH 7.3; analyte 1 mg/mL monoclonal antibody (mAb) in PBS; velocity: 5 MV/min = 12 sec residence or contact time with or in the medium).
The results are depicted in Figure 7, which clearly shows that, when keeping the process parameters constant (contact and process time), the larger the coefficient of variance of the median bridge diameter is, the smaller also the dynamic binding capacity is.

<u>Example 5</u>: Relationship between DBC 10% of separation matrices and their specific interface between the first and the second continuous phases

Separation matrices comprising a self-gelled porous polysaccharide as the first continuous phase were prepared and analyzed with respect to their specific interface between the first and the second continuous phases and DBC 10% (ligand: affinity protein A; buffer: phosphate-buffered saline (PBS) pH 7.3; analyte 1 mg/mL monoclonal antibody (mAb) in PBS; velocity: 5 MV/min = 12 sec residence or contact time with or in the medium). The separation matrices in this Example are designed to have the maximum possible static binding capacity accessible via ligand immobilization.
The results are depicted in Figure 8, which clearly shows that, when keeping the process parameters constant (contact and process time), the larger the specific interface between the first and the second continuous phases is, the faster the mass transport can take place and the larger also the dynamic binding capacity is.

**Claims**

1. A chromatographic material comprising a polymer network material-based self-supporting bi-continuous separation matrix comprising a first continuous phase and a second continuous phase, the chromatographic material optionally comprising a third inert phase, wherein the first continuous phase is a portion of the matrix which is formed by a self-gelled polysaccharide and wherein the second continuous phase is a portion of the matrix which defines non-cylindrical large diameter continuously connected convective pores in-between the first continuous phase, wherein the non-cylindrical large diameter continuously connected convective pores have a median pore diameter of from 0.1 $\mu$m to 6.0 $\mu$m, and wherein the third inert phase does not constitute the structure of the second continuous phase.

2. The chromatographic material according to claim 1, wherein the self-gelled polysaccharide is one or more selected from the group consisting of agarose, agar, agaropectin, kappa-carrageenan, iota-carrageenan, lambda-carrageenan, gellan gum, amylose, curdlan, alginate and rhamsan gum.

3. The chromatographic material according to claim 1 or 2, wherein the median bridge diameter of the first continuous phase is from 0.4 to 4 times larger than the median pore diameter of the non-cylindrical large diameter continuously connected convective pores.

4. The chromatographic material according to any one of claims 1 to 3, wherein when a convective porosity $\varepsilon$ is the ratio of the volume of the second continuous phase to the total volume of the first and second continuous phase, the convective porosity $\varepsilon$ is from 0.05 to 0.7.

5. The chromatographic material according to any one of claims 1 to 4, which has a permeability of at least $0.31 \times (\varepsilon \times 100)$ mD, wherein $\varepsilon$ is the convective porosity.

6. The chromatographic material according to any one of claims 1 to 5, wherein the coefficient of variance of the median pore diameter of the non-cylindrical large diameter continuously connected convective pores is at most 0.8.

7. The chromatographic material according to any one of claims 1 to 6, wherein the coefficient of variance of the median bridge diameter of the first continuous phase is at most 0.7.

8. The chromatographic material according to any one of claims 1 to 7, further comprising the third inert phase.

9. The chromatographic material according to claim 8, wherein a ratio of the volume of the third inert phase to the total volume of the chromatographic material including the third inert phase is from 0.03 to 0.60.

10. A method of producing the chromatographic material according to any one of claims 1 to 9, the method comprising the steps of:

(a) preparing a solution (A) comprising a self-gelling polysaccharide and a first solvent;
(b) preparing a solution (B) comprising at least one surfactant and a second solvent which is an immiscible solvent to solution (A);
(c) combining solution (A) and solution (B) to produce a combined solution (C);
(d) emulsifying the combined solution (C) at a condition to allow the self-gelling polysaccharide to remain in solution in the first solvent as solution (A) to obtain an emulsion which is in form of a solution (B)-in-solution (A)-emulsion; and
(e) allowing solution (A) containing the self-gelling polysaccharide to solidify by gelation at a certain condition to form the chromatographic material which comprises the separation matrix comprising the self-gelled polysaccharide as the first continuous phase.

11. The method according to claim 10 in which the self-gelling polysaccharide is agarose, the method comprising the steps of:

(a) preparing the solution (A) comprising agarose and water by heating an agarose-in-water-suspension to at least 90°C for at least 15 minutes to solve the agarose in the water;
(b) preparing the solution (B) comprising the at least one surfactant and the second solvent which is a water-immiscible organic solvent and heating solution (B) to a temperature above the gelation temperature of the used agarose;
(c) combining solution (A) and solution (B) at a temperature of above the gelation temperature of the used agarose to produce a combined solution (C);
(d) emulsifying combined solution (C) at a temperature above the gelation temperature of the used agarose to allow the agarose to remain in solution in the first solvent as solution (A) to obtain an emulsion which is in form of a solution (B)-in-solution (A)-emulsion; and
(e) allowing solution (A) containing the self-gelling agarose to solidify by gelation at a temperature below the gelation temperature of the used agarose to form the chromatographic material which comprises the separation matrix comprising the self-gelled agarose as the first continuous phase.

12. The method according to claim 10 or 11, wherein the at least one surfactant has an HLB value of from 8 to 16.

13. The method according to any one of claims 10 to 12, wherein the second solvent is one or more selected from $C_{4-12}$ alcohols, $C_{4-12}$ isoalcohols, alkanes, silicone oils having a viscosity of from 4 to 200 cP, and natural oils having a viscosity of from 4 to 200 cP, and mixtures thereof.

14. The method according to any one of claims 10 to 13, wherein the at least one surfactant is selected from polysorbates and/or $C_{2-150}$ fatty acid esters of sorbitol.

15. The method according to any one of claims 10 to 14, wherein the concentration of the polysaccharide in solution (A) is from 0.5 to 8 wt%.

16. The method according to any one of claims 10 to 15, wherein the volume ratio of the second solvent in the combined solution (C) in step (c) is from 10 to 70 vol%.

17. The method according to any one of claims 10 to 16, wherein step (e) is performed by pouring the emulsion on a casting form and cooling the emulsion below the gelling point.

Figure 1

Polysaccharide particles
Øparticles = 30-200 µm
diffusive pathlength = 15-100 µm

vs.

Polysaccharide membrane
Øbridges = 0.1-18 µm
diffusive pathlength = 0.05-9 µm

↓ convective flow     ▮ = area with diffusional mass transport

Figure 2

Figure 3

Figure 4

Figure 5

Figure 6

Figure 7

Figure 8

Europäisches
Patentamt

European
Patent Office

Office européen
des brevets

# EUROPEAN SEARCH REPORT

**Application Number**

EP 20 21 6353

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 00/17257 A1 (AMERSHAM PHARM BIOTECH AB [SE]; BERG HANS [SE]; CARLSSON MATS [SE]) 30 March 2000 (2000-03-30) * claim 1; example 1 * | 1-7,10, 11,13-16 | INV. B01J20/24 B01J20/28 B01J20/285 B01J20/291 |
| X | WO 93/19115 A1 (PHARMACIA LKB BIOTECH [SE]) 30 September 1993 (1993-09-30) * examples 1,4 * | 1-10, 12-17 | B01J20/30 B01J20/32 B01D15/38 B01D67/00 |
| A | EP 1 764 151 A1 (MILLIPORE CORP [US]) 21 March 2007 (2007-03-21) * the whole document * | 1-17 | B01D69/06 B01D71/08 C08J3/16 |
| A | WO 2004/056473 A1 (AMERSHAM BIOSCIENCES AB [SE]; BUCKLEY DAVID [SE]; BUSSON PHILIPPE [SE]) 8 July 2004 (2004-07-08) * the whole document * | 1-17 | |

TECHNICAL FIELDS SEARCHED (IPC)

B01J
B01D
C08J

The present search report has been drawn up for all claims

| Place of search | Date of completion of the search | Examiner |
|---|---|---|
| The Hague | 7 June 2021 | Klemps, Christian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 20 21 6353

This annex lists the patent family members relating to the patent documents cited in the above-mentioned European search report.
The members are as contained in the European Patent Office EDP file on
The European Patent Office is in no way liable for these particulars which are merely given for the purpose of information.

07-06-2021

| Patent document cited in search report | | Publication date | Patent family member(s) | | Publication date |
|---|---|---|---|---|---|
| WO 0017257 | A1 | 30-03-2000 | AT | 233293 T | 15-03-2003 |
| | | | DE | 69905590 T2 | 11-12-2003 |
| | | | EP | 1115774 A1 | 18-07-2001 |
| | | | JP | 2002526579 A | 20-08-2002 |
| | | | US | 6590096 B1 | 08-07-2003 |
| | | | WO | 0017257 A1 | 30-03-2000 |
| WO 9319115 | A1 | 30-09-1993 | AT | 181087 T | 15-06-1999 |
| | | | AU | 3772693 A | 21-10-1993 |
| | | | CA | 2132344 A1 | 30-09-1993 |
| | | | DE | 69325266 T2 | 20-01-2000 |
| | | | EP | 0631597 A1 | 04-01-1995 |
| | | | ES | 2136657 T3 | 01-12-1999 |
| | | | JP | 3473852 B2 | 08-12-2003 |
| | | | JP | H07505415 A | 15-06-1995 |
| | | | US | 5723601 A | 03-03-1998 |
| | | | WO | 9319115 A1 | 30-09-1993 |
| EP 1764151 | A1 | 21-03-2007 | CN | 1939582 A | 04-04-2007 |
| | | | DK | 1764151 T3 | 01-08-2016 |
| | | | EP | 1764151 A1 | 21-03-2007 |
| | | | ES | 2582362 T3 | 12-09-2016 |
| | | | JP | 4662900 B2 | 30-03-2011 |
| | | | JP | 2007077397 A | 29-03-2007 |
| | | | PL | 1764151 T3 | 30-12-2016 |
| | | | SG | 131015 A1 | 26-04-2007 |
| | | | US | 2007069408 A1 | 29-03-2007 |
| | | | US | 2010227015 A1 | 09-09-2010 |
| WO 2004056473 | A1 | 08-07-2004 | AU | 2003287139 A1 | 14-07-2004 |
| | | | CA | 2508271 A1 | 08-07-2004 |
| | | | EP | 1572351 A1 | 14-09-2005 |
| | | | JP | 2006510482 A | 30-03-2006 |
| | | | US | 2006065583 A1 | 30-03-2006 |
| | | | WO | 2004056473 A1 | 08-07-2004 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4935365 A
- US 5723601 A
- US 7479233 B2
- US 8298657 B2
- US 7479223 B2
- US 20110120947 A1
- US 7316919 B2

**Non-patent literature cited in the description**

- **LEY.** *Journal of Membrane Science,* 2018, vol. 564, 543-551
- **GUAN, HONG ; GUIOCHON, GEORGES.** Study of physico-chemical properties of some packing materials. *Journal of Chromatography A - J CHROMATOGR A,* 1996, vol. 731, 27-40
- **BERG.** *Transport in Porous Media,* 2014, 10, https://arxiv.org/pdf/1505.02424.pdf
- Classification of Surface-Active Agents by 'HLB. *Journal of the Society of Cosmetic Chemists,* 1949, vol. 1 (5), 311-26
- Calculation of HLB Values of Non-Ionic Surfactants. *Journal of the Society of Cosmetic Chemists,* 1954, vol. 5 (4), 249-56
- A quantitative kinetic theory of emulsion type, I. Physical chemistry of the emulsifying agent. *Gas/Liquid and Liquid/Liquid Interface, Proceedings of the International Congress of Surface Activity,* 1957, 426-38
- **F. K. HANSEN ; G. RODSRUD.** Surface Tension by Pendant Drop. *Journal of Colloid and Interface Science,* 1991, vol. 141 (1
- **A. KRISHNA MALLIA ; PAUL K. SMITH ; GREG T. HERMANSON.** Immobilized Affinity Ligand Techniques. Elsevier Science, 1992
- **C. M. STOSCHECK.** Methods in enzymology. *Quantitation of protein,* 1990, vol. 182, 50-68